# EUROPÄISCHE PATENTANMELDUNG

(11) **EP 1 082 999 A1**
(43) Veröffentlichungstag der Anmeldung: **14.03.2001**
(21) Anmeldenummer: 00115948.2
(22) Anmeldetag: 26.07.2000
(51) Int. Cl.: B05B 1/08

(54) **Fluidicdüse mit einrastbarem Düseneinsatz**

(30) Priorität: 10.09.1999 DE 19943262
(71) Anmelder: Mannesmann VDO AG, 60388 Frankfurt am Main (DE)
(72) Erfinder: Hoffmann, Bernd, 36251 Bad Hersfeld (DE); Hofmann, Jürgen, 34212 Melsungen (DE)
(74) Vertreter: Rassler, Andrea, Dipl.-Phys.

(57) **Zusammenfassung**

Bei einer Fluidicdüse (12) ist ein Düsenkörper (13) in einem Gehäuse (17) mittels einer formschlüssigen Rastverbindung (18) fixiert. Hierzu greift ein elastisch verformbarer Rastkörper (14) in eine Ausnehmung (16) des Gehäuses (17) ein. Die Betriebsstellung des Düsenkörpers (13) ist dadurch mit hoher Genauigkeit definiert, so dass ein unerwünschtes Austreten von Flüssigkeit zwischen dem Düsenkörper (13) und dem Gehäuse (17) ausgeschlossen ist. Weiterhin ist hierbei zugleich eine Reduzierung der Kontaktfläche auf einen einer Auslassöffnung (19) der Fluidicdüse (12) zugeneigten Abschnitt (20) mit einer entsprechend verbesserten Abdichtung möglich.

## Beschreibung

Die Erfindung betrifft eine Fluidicdüse mit einem in einem Gehäuse fixierten Düsenkörper, wobei das Gehäuse eine Einlassöffnung für eine Flüssigkeit aufweist.

Eine solche Fluidicdüse wird beispielsweise bei Scheinwerferreinigungsanlagen eines Kraftfahrzeuges eingesetzt und ist somit bekannt. Die Fluidicdüse ermöglicht hierbei das selbsttätige Verschwenken eines stark gebündelten Flüssigkeitsstrahles über eine vergleichsweise große Fläche. Daher sind weitere mechanische Hilfsmittel zur Ablenkung des Flüssigkeitsstrahles nicht erforderlich.

Die Fluidicdüse besteht aus dem Gehäuse, in das der im Wesentlichen flache Düsenkörper insbesondere von einer Vorderseite eingeführt wird. Um das Herausfallen des Düsenkörpers auch bei relativ hohem Flüssigkeitsdruck wirkungsvoll zu verhindern, sind an einer Innenfläche des Gehäuses im Wesentlichen linsenförmige Noppen angebracht, mit denen der Düsenkörper beim Einsetzen in das Gehäuse in diesem verklemmt wird. Die Noppen liegen hierzu gegen eine Vertiefung an dem Düsenkörper an, um die Spaltmaße zwischen dem Düsenkörper und dem Gehäuse möglichst gering zu halten. Als nachteilig bei diesem Stand der Technik hat sich erwiesen, dass die Klemmverbindung aufgrund der hierzu erforderlichen Vertiefung an dem Düsenkörper zugleich auch zu Undichtigkeiten der Fluidicdüse führt und die Flüssigkeit durch den hierbei erforderlichen Spalt unkontrolliert austreten kann. Dies führt zu einer Beeinträchtigung des optischen Erscheinungsbildes der zumeist in einem sichtbaren Bereich des Kraftfahrzeuges angebrachten Fluidicdüse, insbesondere durch Tropfenbildung an einem an der Fluidicdüse angrenzenden Karosserieelement.

Es sind bereits Ausführungsformen einer solchen Fluidicdüse bekannt, bei denen das Problem der Undichtigkeit dadurch vermieden werden soll, dass der Düsenkörper von einer Rückseite in das Gehäuse eingesetzt wird. Hierdurch wird der Düsenkörper von dem Druck der Flüssigkeit gegen einen vorderen Randbereich einer Auslassöffnung gepresst und führt so zu einer verbesserten Abdichtung. Nachteilig wirkt sich dabei aus, dass hierzu das Gehäuse im Bereich der Einlassöffnung teilbar ausgeführt wird, was zu einem erhöhten Herstellungsaufwand führt. Daher sind solche Ausführungsformen in der Praxis nur in Einzelfällen anzutreffen.

Der Erfindung liegt das Problem zugrunde, eine Fluidicdüse der eingangs genannten Art so zu gestalten, dass ein unkontrolliertes Austreten von Flüssigkeit aus der Fluidicdüse weitgehend ausgeschlossen ist.

Dieses Problem wird erfindungsgemäß dadurch gelöst, dass der Düsenkörper in dem Gehäuse mittels einer formschlüssigen Rastverbindung fixiert ist. Diese Rastverbindung ermöglicht dabei eine definierte Anlagefläche des Düsenkörpers an dem Gehäuse, so dass die Spaltmaße verringert werden können und ein unerwünschtes Austreten der Flüssigkeit dadurch ausgeschlossen ist. Die Rastverbindung ist dabei beispielsweise auch ohne eine Vertiefung realisierbar, so dass eine im Wesentlichen glatte Außenfläche des Düsenkörpers erreicht wird.

Dabei ist eine besonders vorteilhafte Weiterbildung der Erfindung dadurch gegeben, dass die Rastverbindung an einer einer Dichtungsfläche des Düsenkörpers abgewandten Fixierfläche angeordnet ist. Hierdurch kann eine Trennung einer durch die Anlagefläche des Düsenkörpers gegen die Einlassöffnung bestimmten Dichtungsfläche von der Fixierfläche erreicht werden. Die Dichtungsfläche kann daher eine auf eine zuverlässige Abdichtung abgestimmte Oberflächenbeschaffenheit aufweisen, so dass die Abdichtung in einfacher Weise weiter verbessert werden kann. Zugleich wird die Fixierung des Düsenkörpers dabei vereinfacht. Diese kann hierzu beispielsweise auch im Bereich einer Auslassöffnung der Fluidicdüse erfolgen, so dass der Düsenkörper für Servicezwecke aus dem Gehäuse entnommen werden kann.

Besonders günstig ist auch eine Ausgestaltung der Erfindung, bei der die Fixierfläche an einer der Einlassöffnung gegenüberliegenden Seite des Düsenkörpers angeordnet ist. Hierdurch liegt der Düsenkörper zugleich mit der Fixierung in dem Gehäuse gegen einen an die Einlassöffnung angrenzenden Randbereich zuverlässig an. Die Abdichtung kann dadurch weiter vereinfacht werden.

Eine besonders vorteilhafte Ausgestaltung der Erfindung ist dann gegeben, wenn die Rastverbindung durch eine Ausnehmung und einen in diese eingreifenden Vorsprung gebildet ist. Hierdurch wird der Montagevorgang wesentlich vereinfacht, indem der Düsenkörper in das Gehäuse eingeführt wird und an der vorbestimmten Position verrastet. Dabei greift der Vorsprung derart in die Ausnehmung ein, dass eine Beweglichkeit des Düsenkörpers relativ zu dem Gehäuse ausgeschlossen ist.

Besonders zweckmäßig ist hierzu auch eine Weiterbildung, bei der die Ausnehmung an dem Düsenkörper und der Vorsprung an dem Gehäuse angeordnet ist. Der Vorsprung kann dadurch für einen jeweiligen Verwendungszweck, insbesondere für einen unterschiedlichen Flüssigkeitsdruck, individuell angepasst werden und so die Dichtwirkung wesentlich verbessert werden, ohne dass hierzu Änderungen an dem Gehäuse vorzunehmen sind. Der Vorsprung kann dabei einteilig oder auch als ein separates Bauelement mit einer geeigneten Materialbeschaffenheit mit dem Düsenkörper verbunden sein.

Eine besonders einfache Ausgestaltung der Erfindung ist auch dadurch gegeben, dass der Düsenkörper zumindest einen elastisch verformbaren Rastkörper aufweist, der in eine Ausnehmung des Gehäuses eingreift. Hierdurch wird der Düsenkörper zur Fixierung lediglich in das Gehäuse eingeführt, bis der Rastkörper an dem Vorsprung selbsttätig verrastet. Der Düsenkörper kann dadurch vergleichsweise klein ausgeführt werden, so dass die Dichtungsfläche zwischen dem Düsenkörper und dem Gehäuse reduziert und dadurch die Abdichtung vereinfacht werden kann. Zugleich kann der zur Herstellung der Fluidicdüse erforderliche Materialaufwand eingeschränkt werden.

Hierbei ist eine besonders einfache Weiterbildung dann gegeben, wenn der Düsenkörper lediglich an einem einer Auslassöffnung der Fluidicdüse zugewandten Abschnitt des Gehäuses gegen das Gehäuse anliegt. Eine durch die Kontaktfläche zwischen dem Düsenkörper und dem Gehäuse gegebene Dichtungsfläche weist hierdurch wesentlich verringerte Abmessungen auf. Die Abdichtung kann dadurch wesentlich erleichtert und zugleich auch die Zuverlässigkeit bei einem hohen Flüssigkeitsdruck erhöht werden.

Eine andere besonders günstige Ausgestaltung der Erfindung ist dadurch gegeben, dass der Düsenkörper gegenüber der Ebene der Einlassöffnung mittels der Rastverbindung vorgespannt ist. Hierdurch kann eine durch den Düsenkörper und das Gehäuse eingeschlossene Dichtungsfläche mit einem bestimmten Anpressdruck belastet und so die Abdichtung verbessert werden. Mögliche Abweichungen der Beschaffenheit des Düsenkörpers und des Gehäuses von einem vorbestimmten Sollwert werden dabei ausgeglichen und so die Betriebssicherheit erhöht.

Die Rastverbindung kann von einer Vorderseite der Fluidicdüse zugänglich sein, um so den Düsenkörper zu Reparaturzwecken entnehmen zu können. Eine andere vorteilhafte Weiterbildung ist hingegen dann erreicht, wenn die Rastverbindung zur unlösbaren Fixierung des Düsenkörpers in dem Gehäuse ausgeführt ist. Hierdurch kann der Düsenkörper spaltfrei in das Gehäuse eingesetzt werden, wodurch die Funktionstüchtigkeit weiter erhöht werden kann. Dabei kann die Rastverbindung auch derart austauschbar mit dem Düsenkörper verbunden sein, dass ein gewaltsames Trennen des Düsenkörpers von dem Gehäuse lediglich zu einer Zerstörung der Rastverbindung führt, die hierzu als Austauschbauteil verfügbar ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt jeweils in einer teilweise geschnittenen Seitenansicht in
- Fig.1: ein Gehäuse und einen darin einzusetzenden Düsenkörper einer erfindungsgemäßen Fluidicdüse,
- Fig.2: eine andere Ausführungsform einer erfindungsgemäßen Fluidicdüse.

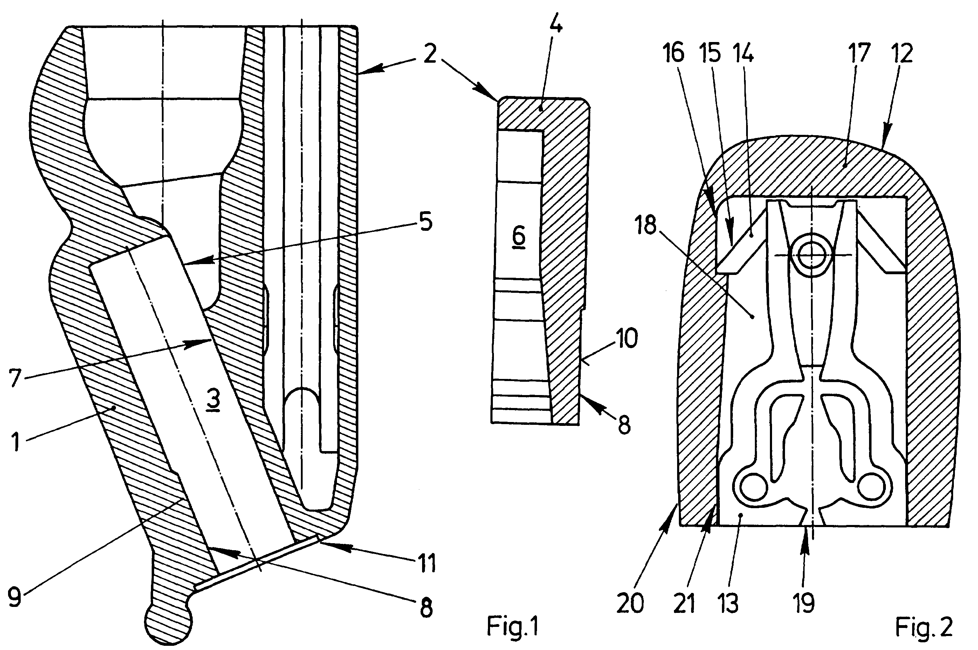

Figur 1 zeigt in einer Seitenansicht eine geschnittene Darstellung eines Gehäuses 1 einer Fluidicdüse 2 und einen in einen Schacht 3 des Gehäuses 1 einzusetzenden Düsenkörper 4. Zu erkennen ist eine Einlassöffnung 5 für die Zufuhr einer nicht dargestellten Flüssigkeit. Durch diese Einlassöffnung 5 gelangt die Flüssigkeit in der nicht dargestellten Betriebsstellung des Düsenkörpers 4 in einen Innenraum 6 des Düsenkörpers 4. Hierzu liegt der Düsenkörper 4 in der nicht dargestellten Betriebsstellung gegen einen an die Einlassöffnung 5 angrenzenden Randbereich 7 an. Zur Fixierung des Düsenkörpers 4 in der Betriebsstellung dient eine Rastverbindung 8, welche durch einen an dem Gehäuse 1 angeordneten Vorsprung 9 und eine mit dem Düsenkörper 4 verbundene Ausnehmung 10 gebildet ist. Der Düsenkörper 4 weist hierzu eine begrenzte elastische Verformbarkeit auf, so dass der Düsenkörper 4 von einer Vorderseite 11 in den Schacht 3 eingeführt werden kann und dort an seiner vorbestimmten Position verrastet.

Eine demgegenüber abgewandelte Ausführungsform einer erfindungsgemäßen Fluidicdüse 12 zeigt Figur 2. Hierbei ist ein Düsenkörper 13 der Fluidicdüse 12 mit einem als elastisch verformbarer Rastkörper 14 ausgeführten Vorsprung 15 ausgestattet. Dieser Rastkörper 14 greift in der gezeigten Betriebsstellung eine Ausnehmung 16 eines Gehäuses 17 der Fluidicdüse 12 ein, die so gemeinsam eine Rastverbindung 18 bilden. Der Düsenkörper 13 liegt dabei ausschließlich an einem einer Auslassöffnung 19 zugeneigten Abschnitt 20 des Gehäuses 17 gegen dieses an. Die hierdurch reduzierte, durch die Kontaktfläche zwischen dem Düsenkörper 13 und dem Gehäuse 17 bestimmte Dichtungsfläche 21 ermöglicht eine einfache Abdichtung auch bei hohem Flüssigkeitsdruck. Zugleich ist dabei die durch die Dichtungsfläche 21 beschriebene Dichtungsebene von der durch eine Rastfläche der Rastverbindung 18 beschriebene Fixierebene unabhängig, so dass eine definierte Betriebsposition des Düsenkörpers 13 mit einer zuverlässigen Fixierung einerseits und einer wirkungsvollen Abdichtung andererseits erreicht wird.

## Patentansprüche

1. Fluidicdüse mit einem in einem Gehäuse fixierten Düsenkörper, wobei das Gehäuse eine Einlassöffnung für eine Flüssigkeit aufweist, **dadurch gekennzeichnet**, dass der Düsenkörper (4, 13) in dem Gehäuse (1, 17) mittels einer formschlüssigen Rastverbindung (8, 18) fixiert ist.

2. Fluidicdüse nach Anspruch 1, **dadurch gekennzeichnet**, dass die Rastverbindung (8, 18) an einer einer Dichtungsfläche (21) des Düsenkörpers (4, 13) abgewandten Fixierfläche angeordnet ist.

3. Fluidicdüse nach Anspruch 2, **dadurch gekennzeichnet**, dass die Fixierfläche an einer der Einlassöffnung (5) gegenüberliegenden Seite des Düsenkörpers (4) angeordnet ist.

4. Fluidicdüse nach zumindest einem der vorhergehenden Ansprüche, **dadurch gekennzeichnet**, dass die Rastverbindung (8, 18) durch eine Ausnehmung (10, 16) und einen in diese eingreifenden Vorsprung (9, 15) gebildet ist.

5. Fluidicdüse nach zumindest einem der vorhergehenden Ansprüche, **dadurch gekennzeichnet**, dass die Ausnehmung (10, 16) an dem Düsenkörper (4, 13) und der Vorsprung (9, 15) an dem Gehäuse (1, 17) angeordnet ist.

6. Fluidicdüse nach zumindest einem der vorhergehenden Ansprüche, **dadurch gekennzeichnet**, dass der Düsenkörper (13) zumindest einen elastisch verformbaren Rastkörper (14) aufweist, der in eine Ausnehmung (16) des Gehäuses (17) eingreift.

7. Fluidicdüse nach zumindest einem der vorhergehenden Ansprüche, **dadurch gekennzeichnet**, dass der Düsenkörper (13) lediglich an einem einer Auslassöffnung (19) der Fluidicdüse (12) zugewandten Abschnitt (20) des Gehäuses (17) gegen das Gehäuse (17) anilegt.

8. Fluidicdüse nach zumindest einem der vorhergehenden Ansprüche, **dadurch gekennzeichnet**, dass der Düsenkörper (4, 13) gegenüber der Ebene der Einlassöffnung (5) mittels der Rastverbindung (8, 18) vorgespannt ist.

9. Fluidicdüse nach zumindest einem der vorhergehenden Ansprüche, **dadurch gekennzeichnet**, dass die Rastverbindung (8, 18) zur unlösbaren Fixierung des Düsenkörpers (4, 13) in dem Gehäuse (1, 17) ausgeführt ist.
